# EUROPÄISCHE PATENTSCHRIFT

(11) **EP 3 058 641 B1**
(45) Veröffentlichungstag und Bekanntmachung des Hinweises auf die Patenterteilung: **16.09.2020**
(21) Anmeldenummer: 14796415.9
(22) Anmeldetag: 13.10.2014
(51) Int. Cl.: H02K 5/20, H02K 9/02

(54) **ANTRIEBSVORRICHTUNG**
DRIVING DEVICE
DISPOSITIF D'ENTRAÎNEMENT

(30) Priorität: 16.10.2013 DE 202013009151 U
(43) Veröffentlichungstag der Anmeldung: 24.08.2016
(73) Patentinhaber: Liebherr-Components Biberach GmbH, 88400 Biberach an der Riß (DE)
(72) Erfinder: MENDES, Marijo, 89077 Ulm (DE); LIS, Johann, 88499 Riedlingen (DE); DUELLI, Stefan, 88436 Eberhardzell (DE); WIDMANN, Roland, 88527 Unlingen (DE)
(74) Vertreter: Thoma, Michael
(86) Internationale Anmeldenummer: PCT/EP2014/002759
(87) Internationale Veröffentlichungsnummer: WO 2015/055295

(56) Entgegenhaltungen:
- EP-A1- 0 416 468
- EP-A1- 1 337 029
- WO-A1-2005/013461
- US-A1- 2005 206 252

## Beschreibung

Die vorliegende Erfindung betrifft einen Elektromotor mit einem Achsteil einer Radachse und mit einer Antriebsvorrichtung für ein Rad einer Arbeitsmaschine, wobei der Elektromotor einen in einem Stator drehbar aufgenommenen Rotor umfasst, der an stirnseitig angeordneten Lagerschilden gelagert ist, zwischen denen Wickelkopfräume zum Aufnehmen von Wickelköpfen vorgesehen sind, wobei eine Kühlvorrichtung zum Kühlen von Stator und Rotor zumindest einen Kühlmittelweg durch die Wickelkopfräume umfasst, der über einen vorzugsweise umfangsseitigen Kühlmitteleinlass von einer Umfangsseite her mit Kühlmittel versorgbar ist. Elektromotoren bestimmter Bauart werden in der Regel durch eine Durchzugsbelüftung gekühlt. Hierbei kann sowohl eine Eigenbelüftung mit auf der Welle des Elektromotors sitzendem Lüfterrad als auch eine Fremdbelüftung mit separat angetriebenem und versorgtem Lüfter realisiert werden. Die Kühlung durch den für die Kühlung verwendeten Kühlmittelstrom kann durch die Konstruktion der Elektromaschine und des zugehörigen anzutreibenden Bauelements wie beispielsweise des Radantriebs variabel gestaltet werden. Als Kühlmittel wird dabei regelmäßig Luft-bzw. ein Luftstrom verwendet, grundsätzlich kommen aber auch andere Kühlgase oder -fluide in Betracht.

Im Fall von Elektromotoren für Radantriebe von Arbeitsmaschinen wie Bau- und/oder Abbaumaschinen bspw. in Form von Trucks, Muldenkippern oder Mining Geräten wird die Durchzugsbelüftung der elektrischen Radmotoren je nach Ausführung auf zwei verschiedene Arten realisiert.

Einerseits wurde bereits vorgeschlagen, einen kalten Luftstrom in die sogenannte Axlebox des Muldenkipper-Hinterradantriebs einzuleiten, wobei der kalte Luftstrom entlang des Stators und/oder Gehäuses auf die Radseite des Elektromotors strömt. Durch die Öffnungen im radseitigen Lagerschild tritt die Luft in das Innere des Motors ein, teilt sich zwischen den Bohrungen im Stator und im Rotor und dem Luftspalt zwischen Stator und Rotor auf und strömt zur radabgewandten Seite. Dort tritt die erwärmte Luft durch Öffnungen in dem radabgewandten Lagerschild des Elektromotors aus.

Hauptproblem bei dieser Ausführung ist im Zusammenhang mit Antrieben für Bau- bzw. Abbaumaschinen wie Muldenkipper die offene Konstruktion des radseitigen Lagerschilds. Hinter der radseitigen Stirnseite des Elektromotors wird üblicherweise das mit Öl geschmierte und gekühlte Getriebe des Radantriebs angebaut. Kommt es hier jedoch zu Leckagen im Ölkreislauf bzw. an der Antriebswellendichtung, wird der Elektromotor mit Getriebeöl kontaminiert. Durch den Kühlmittelstrom, der durch den getriebeseitigen Lagerschild in das Innere des Elektromotors eintritt, werden Öltröpfchen und auch andere Verschmutzungen mit in den Innenraum des Elektromotors hineinbefördert. Die erfolgte Kontamination des Motors versetzt diesen in einen üblicherweise irreparablen Zustand, wodurch ein einfacher Schaden im Ölkreislauf den vollständigen Ausfall der elektrischen Antriebskomponente mit sich bringen kann.

Andererseits sind Ausführungen von Elektromotoren bekannt, bei denen die Kühlluft dem Elektromotor vom Außenumfang her etwa mittig, d.h. in der Mitte des Motorgehäuses zugeführt wird und nach Umlenkungen im Inneren der Elektromaschine an beiden stirnseitigen Enden über die Lagerschilde wieder ausgestoßen wird, vgl. bspw. DE 103 17 593 A1. Hierdurch kann der Elektromotor zwar vor dem Eindringen von Öl und anderen Verschmutzungssubstanzen geschützt werden, benötigt jedoch ein Gehäuse, welches für die Luftaufteilung verwendet wird. Dies vergrößert jedoch den äußeren Durchmesser und auch das Gewicht des Elektromotors, so dass der Elektromotor zumindest für Radantriebe kleinerer Arbeitsmaschinen aus Platzgründen nicht verwendbar ist und die ungefederten Massen deutlich erhöht, so dass solche Ausführungen von Elektromotoren vorrangig für sehr große Muldenkipper verwendbar sind.

Ferner ist aus der Schrift WO 2005/013461 ein Elektromotor mit einer Durchzugsbelüftung bekannt, bei der die Kühlluft radial an einem Gehäuse endet, in das Innere des Gehäuses geführt wird, dort über den Stator zum anderen Ende des Gehäuses strömen kann, um dann durch Kanäle im Stator zurück zum ersten Gehäuseende zu strömen, wo die Kühlluft dann axial austreten kann.

Ferner ist aus der Schrift EP 1 337 029 A1 ein Elektromotor bekannt, bei dem die Kühlluft über eine Stirnseite auf einen Lagerschild steckbare Haube auf die Kopfwicklungen und durch den Stator-Rotorbereich hindurch zum anderen Ende geleitet werden kann, um dort auszutreten, wobei das Stator-Blechpaket gehäuselos ausgebildet sein soll. Durch die Verwendung der aufsteckbaren Belüftungshaube soll eine Umstellung zwischen radialer und axialer Belüftung ermöglicht werden.

Hiervon ausgehend liegt der vorliegenden Erfindung die Aufgabe zugrunde, eine verbesserte Antriebsvorrichtung der eingangs genannten Art zu schaffen, die Nachteile des Standes der Technik vermeidet und letzteren in vorteilhafterweise weiterbildet. Insbesondere soll eine ausreichende Kühlung ohne Verschmutzungsproblematik für den Motoreninnenraum mit einer räumlich kompakten und leicht bauenden Ausbildung des Elektromotors erzielt werden, so dass der Antrieb auch als Radantrieb für kleinere Muldenkipper und ähnliche Bau- bzw. Abbaumaschinen verwendbar ist.

Erfindungsgemäß wird die genannte Aufgabe durch einen Elektromotor mit einem Achsteil einer Radachse und mit einer Antriebsvorrichtung für ein Rad einer Arbeitsmaschine gemäß Anspruch 1 gelöst. Bevorzugte Ausgestaltungen der Erfindung sind Gegenstand der abhängigen Ansprüche.

Es wird nach der vorliegenden Erfindung vorgeschlagen, den Stator und dessen Statorwicklung von einer Außenumfangsseite des Stators her zu kühlen und hierfür einen zur Einbauumgebung des Elektromotors vorhandenen Raum um den Elektromotor bzw. dessen Stator herum zu nutzen, so dass der Kühlluftstrom über die Außenumfangsseite des Stators strömen kann. Das in den Motorinnenraum eingeleitete Kühlmittel kann über nur einen Lagerschild an einer Stirnseite des Elektromotors wieder abströmen, während der andere vorzugsweise einem Getriebe zugewandte Lagerschild geschlossen ausgebildet ist. Der den Stator umgebende Raum ist außenumfangsseitig durch einen vom Stator beabstandeten Gehäuseteil begrenzt, in dem der umfangsseitige Kühlmitteleinlass ausgebildet ist und kann innen umfangsseitig über Verbindungsöffnungen, die an den Enden des Stators bei den Lagerschilden vorgesehen sind, mit dem Wickel kopfraum kommunizieren. Vorteilhafterweise kann bei einer solchen Ausbildung des Elektromotors das Kühlmittel über den Kühlmitteleinlass von einer Umfangsseite her in den genannten Raum einströmen, sich dort verteilen und über die Außenumfangsseite des Stators strömen, um den Stator zu kühlen, und durch die Verbindungsöffnungen in die Wickelkopfräume im Inneren des Elektromotors einströmen, um den Rotor und die Wickelköpfe zu kühlen, und schließlich an dem Kühlmittelauslass in dem genannten einen Lagerschild austreten.

Durch eine solche Durchzugsbelüftung kann eine stirnseitige Ölverschmutzung des Motorinnenraums vermieden, gleichzeitig aber eine ausreichende Kühlung insbesondere auch am Stator erreicht werden, wobei durch die Nutzung eines Raums, der um den Elektromotor herum zur Einbauumgebung an sich bereits vorhanden ist, radialer Bauraum bestmöglich ausgenutzt bzw. eingespart werden kann, so dass die Antriebsvorrichtung insgesamt auch für kleinere Radantriebe an leichteren Muldenkippern geeignet ist.

Dabei kann das in einen der Wickelkopfräume eintretende Kühlmittel durch Bohrungen bzw. Kanäle im Rotor und/oder durch den Luftspalt zwischen Stator und Rotor vom genannten Wickelkopfraum auf der Seite des geschlossenen Lagerschilds in den Wickelkopfraum mit dem zumindest einen Kühlmittelauslass strömen. Gemäß der Erfindung ist der Elektromotor selbst gehäuselos ausgebildet, wobei das den genannten Raum an der Außenumfangsseite begrenzende Gehäuseteil von einem Strukturteil der Einbauumgebung des Elektromotors gebildet ist.

Je nach Einbausituation des Elektromotors kann - nicht zur Erfindung gehörend - das genannte Strukturteil verschiedene Ausbildungen besitzen, wobei das genannte Strukturteil jedoch nicht vorrangig der Einhausung des Elektromotors dient, sondern einen anderen funktionalen Hauptzweck erfüllt und an sich bereits aufgrund dieses anderen Hauptzwecks vorhanden ist, bspw. zur Lagerung der von dem Elektromotor anzutreibenden Baugruppe.

Bei erfindungsgemäßer Verwendung des Elektromotors in einem Radantrieb bspw. eines Muldenkippers ist das genannte Strukturteil ein Achsteil der Radachse des Rades, das von dem Elektromotor angetrieben wird, wobei in dem genannten Achsteil der Elektromotor aufgenommen ist. Wird der Elektromotor zum Antreiben eines Kettenfahrwerks eingesetzt, kann das genannte Strukturteil ebenfalls eine Achsteil sein, in dem der Elektromotor angeordnet ist, wobei das Achsteil in diesem Fall einem Antriebsritzel bzw. dem Turas der Kette zugeordnet sein kann.

Bei der genannten gehäuselosen Ausbildung des Elektromotors kann insbesondere der Stator mit seiner Außenumfangsfläche freiliegend zu dem genannten Raum angeordnet sein und den Innenumfang des genannten Raums begrenzen. Insbesondere kann das Statorblechpaket und/oder eine an dem genannten Statorblechpaket angeordnete Statorwicklung zumindest teilweise freiliegend an den genannten Raum angrenzen, so dass die Kühlluft in dem Raum zwischen der Einbauumgebung des Elektromotors und den Statorblechen bzw. -wicklungen hindurch unmittelbar über den Stator streichen kann.

Weiterhin kann in vorteilhafter Ausbildung der Erfindung der Elektromotor ohne Zwischenschaltung eines eigenen Gehäuses direkt über einen an einem Statorende vorgesehenen Statorendring und/oder das damit verbundene Lagerschild an das Strukturteil der Einbauumgebung, insbesondere das Radachsgehäuse angebaut und daran befestigt werden. In Weiterbildung der Erfindung kann der genannte Statorendring, der an dem Stator des Elektromotors stirnseitig angeordnet ist, mit dem die Statorwicklung aufweisenden Statorblechpaket eine Einheit bilden und Befestigungsstellen aufweisen, mittels derer der Elektromotor an dem genannten Strukturteil befestigt wird. Beispielsweise kann der genannte Statorendring quer zur Drehachse des Elektromotors ein Stück weit über das Statorblech hinausragen und am hinausragenden Kragenabschnitt die genannten Befestigungsstellen aufweisen, bspw. in Form von axialen Durchgangsbohrungen, die ein axiales Festschrauben am anzutreibenden Rad bzw. einem damit verbundenen Radachsteil erlauben.

Um die Kühlwirkung des durch den vorgenannten Raum strömenden Luftstroms auf den Stator zu erhöhen, kann der Stator in vorteilhafter Weiterbildung der Erfindung außenumfangsseitig Kühlrippen aufweisen, die in den genannten Raum hineinragen. Beispielsweise können die genannten Kühlrippen durch Aussparungen oder Ausfräsungen im Statorblechpaket gebildet sein. Die vorgenannten Verbindungsöffnungen, durch die der Raum mit dem Motorinnenraum bzw. den Wickelkopfräumen kommuniziert, können in Weiterbildung der Erfindung auf den verschiedenen Seiten des Stators unterschiedliche Flächen besitzen bzw. unterschiedlich groß ausgebildet sein, wobei vorteilhafterweise die zumindest eine Verbindungsöffnung auf der Seite des geschlossenen Lagerschilds größer ausgebildet sein kann als die zumindest eine Verbindungsöffnung auf der Seite des anderen Lagerschilds. Sind mehrere Verbindungsöffnungen auf jeder Seite des Stators vorgesehen, können alle Verbindungsöffnungen zusammen, die auf einer Statorseite, insbesondere der Seite des geschlossenen Lagerschilds, vorgesehen sind, eine größere Fläche - in Summe betrachtet - besitzen als die anderen Verbindungsöffnungen, die auf der anderen Seite des Stators am anderen Lagerschild vorgesehen sind.

Die genannten Verbindungsöffnungen können dabei insbesondere durch den Stator bzw. die Statorbleche hindurchgehend ausgebildet sein, so dass der Motorinnenraum bzw. die Wicklungskopfräume quer zur Drehachse des Elektromotors mit dem außenliegenden Raum kommunizieren.

Die größenmäßige Gestaltung der genannten Verbindungsöffnungen ist dabei insbesondere derart getroffen, dass auf der Seite des geschlossenen Lagerschilds mehr Kühlmittel in den Motorinnenraum einströmt als auf der Seite des anderen Lagerschilds, in dem der Kühlmittelauslass vorgesehen ist. Die größenmäßige Gestaltung der Durchgangsöffnungen kann dabei insbesondere derart getroffen sein, dass auf der Seite des geschlossenen Lagerschilds etwa doppelt so viel Kühlmittel in den Motorinnenraum bzw. Wickelkopfraum einströmt als auf der Seite des Lagerschilds mit dem Kühlmittelauslass.

Um den Rotor im Inneren des Elektromotors ausreichend zu kühlen, kann der genannte Rotor mit Kühlmittelkanälen bzw. -bohrungen versehen sein, durch die hindurch das Kühlmittel von der Seite des geschlossenen Lagerschilds zu dem Lagerschild mit der Kühlmittelauslassöffnung hindurchströmen kann.

Die Kühlmittelzufuhr über den vorgenannten Kühlmitteleinlass kann grundsätzlich an verschiedener Stelle des genannten Raums erfolgen, wobei vorteilhafterweise der Kühlmitteleinlass umfangsseitig angeordnet sein kann, um Kühlmittel von einer Umfangsseite her in den den Stator umgebenden Kühlraum einleiten zu können. Der genannte Kühlmitteleinlass kann dabei von den axialen Endabschnitten des genannten Raums beabstandet in einem mittleren Raumabschnitt angeordnet sein. Dabei kann eine exakt mittige Anordnung des Kühlmitteleinlasses bei fünfzig Prozent der Länge des axialen Raums vorgesehen sein. In alternativer, vorteilhafter Ausbildung der Erfindung kann der Kühlmitteleinlass von der genannten Mitte ein Stück weit zu dem Lagerschild, der die Kühlmittelauslassöffnung aufweist, verschoben sein, bspw. bei etwa einem Drittel der axialen Länge des Raums - ausgehend von dem die den Kühlmittelauslass aufweisenden Lagerschild - angeordnet sein. Vorteilhafterweise ist der genannte Kühlmitteleinlass auf einer Oberseite des genannten Strukturteils angeordnet.

Der vom Kühlmittel durchströmbare Raum, der den Stator umgibt, kann verschieden ausgebildet sein, beispielsweise nur einen Teil des Stators umgeben bzw. sich nur entlang eines Sektors des Stators erstrecken. In vorteilhafter Weiterbildung der Erfindung kann der genannte Raum einen Ringraum bilden, der den Stator rundum umschließt.

Der Elektromotor kann mit dem anzutreibenden Rad der Arbeitsmaschine unter Zwischenschaltung eines Getriebes verbunden sein, um die Drehzahl der Motorwelle in der gewünschten Weise bzw. im gewünschten Übersetzungs-/ Untersetzungsverhältnis in die Drehzahl des anzutreibenden Rades zu wandeln. Erfindungsgemäss ist der Elektromotor auf der Seite des geschlossenen Lagerschildes mit einem Getriebe verbunden.

Die Erfindung wird nachfolgend anhand eines bevorzugten Ausführungsbeispiels und zugehöriger Zeichnungen näher erläutert. In den Zeichnungen zeigen:

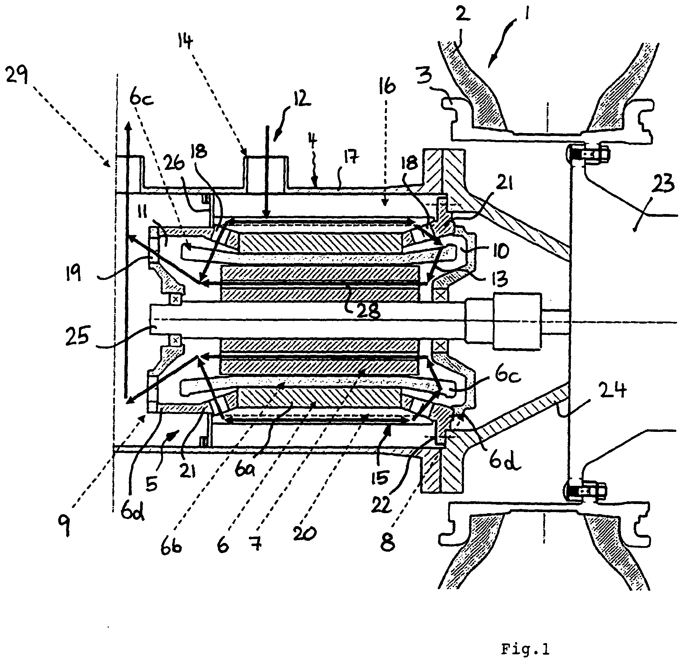

- Fig. 1:: einen Längsschnitt durch eine Antriebsvorrichtung für das Rad eines Muldenkippers nach einer vorteilhaften Ausführung der Erfindung, wobei der Elektromotor und das den Elektromotor umgebende Strukturteil in Form der Axlebox des Radantriebs jeweils im Schnitt gezeigt sind.

Wie Fig. 1 zeigt, kann das von der Antriebsvorrichtung anzutreibende Rad ein Fahrwerksrad, bspw. Hinterrad oder Vorderrad, einer selbstfahrenden Arbeitsmaschine sein, insbesondere ein Muldenkipperrad 1, das einen auf eine Felge 3 aufgezogenen Reifen 2 umfassen kann. Dabei kann ein einzelnes Rad angetrieben werden, wie dies Fig. 1 zeigt, oder es können auch zwei auf einer gemeinsamen Achse sitzende Räder, bspw. in Form einer Zwillingsradanordnung, von einem gemeinsamen Elektromotor 5 angetrieben werden.

Vorteilhafterweise kann das anzutreibende Rad 1 dabei drehbar an einer Radachse 24 gelagert sein, die ein längliches, hohles, näherungsweise bspw. hohlzylindrisches, Achsgehäuse 4 aufweisen kann, wobei das genannte Achsgehäuse 4 in an sich bekannter Weise federnd und/oder lenkbar an einem Chassis des Fahrzeugs bzw. der Arbeitsmaschine aufgehängt sein kann. Insbesondere kann das genannte Achsgehäuse 4 eine sogenannte Axlebox bilden, in der der Elektromotor 5 untergebracht werden kann, wie noch näher erläutert wird.

Die Antriebsbewegung des Elektromotors 5 kann dabei vorteilhafterweise über ein Getriebe 23 auf das Rad 1 übertragen werden, wobei das genannte Getriebe 23 an einer Stirnseite des Elektromotors 5 angeordnet sein kann, so dass sich eine axial hintereinanderliegende Anordnung von Elektromotor 5 und Getriebe 23 ergibt. Die Motorwelle 25 des Elektromotors 5 ist mit einer Getriebeeingangswelle des Getriebes 23 drehfest verbunden und kann zu dieser koaxial angeordnet sein. Ein Getriebeausgangselement, bspw. in Form des Getriebegehäuses kann drehfest mit der Felge 3 verbunden sein, insbesondere die Radnabe bilden, an der die Felge 3 befestigbar ist.

Wie Fig. 1 weiter zeigt, kann der Elektromotor 5 selbst gehäuselos ausgebildet sein und lediglich von dem genannten Achsgehäuse 4 in Form der Axlebox der Radaufhängung eingehaust sein, insbesondere umfangsseitig umgeben sein.

Der Elektromotor 5 kann dabei in an sich bekannter Weise einen außenliegenden Stator 6 umfassen, in dem ein Rotor 7 drehbar aufgenommen ist, der mit der genannten Motorwelle 25 drehfest verbunden ist und - über die genannte Motorwelle 25 - drehbar an Lagerschilden 8 und 9 gelagert ist, die stirnseitig an den Enden des Stators 6 angeordnet sind, vgl. Fig. 1.

Der Stator 6 kann dabei ein Statorblechpaket 6a umfassen, an dem in an sich bekannter Weise eine Statorwicklung 6b angebracht sein kann, deren Wickelköpfe 6c sich zu den Lagerschilden 8 und 9 hin erstrecken und in von den genannten Lagerschilden 8 und 9 abgeschirmten Wickelkopfräumen 10 und 11 aufgenommen sind.

An den stirnseitigen Enden des Statorblechpakets 6a können Statorendringe 6d angebracht sein, die mit dem genannten Statorblechpaket 6a eine Einheit bilden können. Mit einem dieser Statorendringe 6d, insbesondere dem getriebeseitigen Statorendring, kann der Elektromotor 5 an der Einbauumgebung, insbesondere dem genannten Achsgehäuse 4 befestigt sein. Der genannte Statorendring 6d kann hierzu einen quer zur Drehachse des Elektromotors 5 auskragenden Befestigungsflansch umfassen, an dem Befestigungsstellen 22, bspw. in Form von Schraubbolzenbohrungen vorgesehen sein können, um den Statorendring 6d fest an einem Abschnitt des Achsgehäuses 4 anschrauben oder in anderer Weise befestigen zu können.

Da der Elektromotor 5 selbst gehäuselos ausgebildet ist, ist der Stator 6, insbesondere dessen Statorblechpaket 6a am Außenumfang freiliegend angeordnet und unmittelbar nur von einem hohlen Raum 16 umgeben, der sich zwischen dem Achsgehäuse 4 und dem Elektromotor 5 erstreckt. Der Innenumfang des Achsgehäuses 4 ist größer als der Außenumfang des Stators 6, so dass sich zwischen Stator 6 und Achsgehäuse 4 ein ringförmiger Spalt bildet, der den genannten Raum 16 definiert.

An der Außenumfangsseite kann der Stator 6, insbesondere dessen Statorblechpaket 6a Kühlrippen umfassen, die in den genannten Raum 16 hineinragen, wobei sich die genannten Kühlrippen in axialer Richtung und/oder in Umfangsrichtung erstrecken können.

Um den Elektromotor 5 zu kühlen, ist im Achsgehäuse 4 ein Kühlmitteleinlass 14 vorgesehen, der an einer Oberseite des Achsgehäuses 4 im Bereich des genannten Raums 16 vorgesehen sein kann, der sich um den Stator 6 herum erstreckt, so dass das Kühlmittel radial in den genannten Raum 16 eingeleitet werden kann. Der genannte Raum 16 ist dabei außenumfangsseitig von dem Achsgehäuse 4 und innenumfangsseitig von dem Stator 6 bzw. dessen Blechpaket 6a begrenzt. Axial wird der genannte Raum 16 einerseits von dem radial überstehenden Befestigungsflansch des Lagerschilds 8 und einem damit verbundenen Befestigungsabschnitt des Achsgehäuses 4 sowie auf der anderen Seite durch einen Begrenzungssteg 26 begrenzt, der ringförmig ausgebildet ist und sich zwischen dem Achsgehäuse 4 und dem Stator 6 erstreckt, vgl. Fig. 1.

Das über den genannten Kühlmitteleinlass 14 in den Raum 16 eingeleitete Kühlmittel verteilt sich zunächst in den genannten Raum 16 und strömt von dem in die Mitte gerückten Kühlmitteleinlass 14 zu beiden axialen Enden des Raums 16 hin und verteilt sich dabei gleichzeitig in Umfangsrichtung um den Stator 6 herum. Durch das Überstreichen der Kühlrippen am Außenumfang des Stators 6 erfährt der Stator 6 eine entsprechende Kühlung.

An den axialen Endabschnitten des Raums 16 kann das Kühlmittel über Verbindungsöffnungen 18 in das Innere des Elektromotors 5 strömen. Die genannten Verbindungsöffnungen 18 sind dabei in Endabschnitten des Stators 6 vorgesehen und kommunizieren den Raum 16 mit den Wickelkopfräumen 10 und 11, die stirnseitig von den genannten Lagerschilden 8 und 9 begrenzt sind. Insbesondere können die genannten Verbindungsöffnungen 18 im Bereich des Wickelköpfe 6c liegen bzw. so angeordnet sein, dass das durch die Verbindungsöffnungen 18 einströmende Kühlmittel die genannten Wickelköpfe 6c umströmt und/oder durchströmt. Der im Stator 6 drehbar aufgenommene Rotor 7 umfasst vorteilhafterweise Kühlmittelkanäle 28, die von einem stirnseitigen Ende des Rotors 7 zu dessen anderen stirnseitigen Ende führen, insbesondere sich in axialer Richtung durch den Rotor 7 hindurcherstrecken können.

Das in den Motorinnenraum einströmende Kühlmittel kann teilweise durch die genannten Kühlmittelkanäle 28 im Rotor 7 und durch den Luftspalt 27 zwischen Rotor 7 und Stator 6 und teilweise direkt - nämlich der Teil, der gemäß Fig. 1 in den linken Wickelkopfraum direkt einströmt - zu dem Lagerschild 9 strömen, das auf der dem Getriebe 23 abgewandten Seite des Elektromotors 5 vorgesehen ist und zumindest einen Kühlmittelauslass 19 umfasst, durch den das Kühlmittel aus dem Motorinnenraum wieder ausströmen kann. Wie Fig. 1 zeigt, kann das Achsgehäuse 4 umfangsseitig eine Kühlmittelauslassöffnung 29 umfassen, so dass das erwärmte Kühlmittel auch aus dem Achsgehäuse 4 wieder austreten kann.

Während das genannte, vom Getriebe 23 abgewandte Lagerschild 9 offen ausgebildet ist und einen Kühlmittelkanal in Form des Kühlmittelauslasses 19 umfasst, ist das andere, dem Getriebe 23 zugewandte Lagerschild 8 geschlossen ausgebildet und verschließt die dem Getriebe 23 zugewandte Stirnseite des Motors 5 dichtend. Insbesondere kann der genannte Lagerschild 8 dichtend an den Statorendring 21 angeschlossen sein und auch gegenüber der Motorwelle 25 abgedichtet sein, so dass der hinter dem Lagerschild 8 liegende Wickelkopfraum 10 und damit der Motor 5 vor Öleintritt vom Getriebe 23 her geschützt ist.

## Patentansprüche

1. Elektromotor mit einem Achsteil einer Radachse und mit einer Antriebsvorrichtung für ein Rad einer Arbeitsmaschine, wobei der Elektromotor (5) einen in einem Stator (6) drehbar aufgenommenen Rotor (7) umfasst, der an stirnseitig angeordneten Lagerschilden (8, 9) gelagert ist, und in dem zwei Wickelkopfräume (10, 11) vorgesehen sind, die durch den Stator (6), den Rotor (7), die Welle (25) und das Lagerschild (8) bzw. das Lagerschild (9) begrenzt werden, wobei eine Kühlvorrichtung (12) zum Kühlen von Stator (6) und Rotor (7) zumindest einen Kühlmittelweg (13) durch die Wickelkopfräume (10, 11) hindurch umfasst, der über einen Kühlmitteleinlass (14) mit Kühlmittel versorgbar ist, wobei die Kühlvorrichtung (12) einen den Stator (6) umgebenden Raum (16) umfasst, der außenumfangsseitig durch ein vom Stator (6) beabstandetes, den genannten Kühlmitteleinlass (14) aufweisendes Gehäuseteil (17) begrenzt ist und über Verbindungsöffnungen (18), die an den Enden des Stators (6) vorgesehen sind, mit den Wickelkopfräumen (10, 11) kommuniziert, wobei ein Lagerschild (8) geschlossen, kühlmittelkanalfrei ausgebildet ist und das andere Lagerschild (9) oder der Stator (6) am Ende des Motors auf der Seite des Lagerschildes (9) zumindest einen Kühlmittelauslass (19) aufweisen, so dass das Kühlmittel über den Kühlmitteleinlass (14) in den Raum (16) geleitet wird, sich im Raum (16) verbreitend über die Außenumfangsseite (15) des Stators (6) geleitet wird, durch die Verbindungsöffnungen (18) hindurch in die Wickelkopfräume (10, 11) eingeführt wird, durch Bohrungen (28) im Rotor (7) und/oder den Luftspalt (27) zwischen Stator (6) und Rotor (7) vom Wickelkopfraum (10) auf der Seite des geschlossenen Lagerschildes (8) in den Wickelkopfraum (11) mit dem mindestens einen Kühlmittelauslass (19) strömt und durch den zumindest einen Kühlmittelauslass (19) abgeleitet wird, **dadurch gekennzeichnet, dass** der Elektromotor (5) gehäuselos mit freiliegendem Stator (6) ausgebildet ist, wobei das den genannten Raum (16) begrenzende Gehäuseteil (17) von einem Achsteil (4) der Radachse gebildet ist, in dem der Elektromotor (5) aufgenommen ist und wobei der Elektromotor (5) auf der Seite des geschlossenen Lagerschilds (8) mit einem Getriebe (23) verbunden ist.

2. Elektromotor nach einem der vorhergehenden Ansprüche, wobei der Stator (6) mit seiner Außenumfangsfläche freiliegend in dem Raum (16) angeordnet ist und den Raum (16) innenumfangsseitig begrenzt.

3. Elektromotor nach dem vorhergehenden Anspruch, wobei an dem Stator (6) in den Raum (16) ragende Kühlrippen (20) vorgesehen sind.

4. Elektromotor nach einem der vorhergehenden Ansprüche, wobei an dem Stator (6) stirnseitig ein Statorendring (21) vorgesehen ist, der mit dem die Statorwicklung aufweisenden Statorblechpaket eine Einheit bildet und Befestigungsstellen (22) zum Befestigen des Elektromotors (5) an der Einbauumgebung aufweist.

5. Elektromotor nach einem der vorhergehenden Ansprüche, wobei der geschlossene, kühlmittelkanalfreie Lagerschild (8) den Motor (5) auf der Seite des Wickelkopfraumes (10) dichtend verschließt.

6. Elektromotor nach einem der vorhergehenden Ansprüche, wobei die Verbindungsöffnungen (18) zwischen dem Raum (16) und den Wickelkopfräumen (10, 11) auf der Seite des geschlossenen Lagerschilds (8) größer sind als die Verbindungsöffnungen (18) auf der Seite des Wickelkopfraumes (11), der den Kühlmittelauslass (19) aufweist.

7. Elektromotor nach dem vorhergehenden Anspruch, wobei die Verbindungsöffnungen (18) zwischen dem Raum (16) und den Wickelkopfräumen (10, 11) derart bemessen sind, dass das Verhältnis der Kühlmittelmenge, die auf der Seite des geschlossenen Lagerschilds (8) in den Wickelkopf (10) eintritt, zu der Kühlmittelmenge, die auf der Seite des Kühlmittelauslasses (19) in den Wickelkopfraum (11) eintritt, zwischen 1,5:1 und 3:1, vorzugsweise etwa 2:1 beträgt.

8. Elektromotor nach einem der vorhergehenden Ansprüche, wobei der Kühlmitteleinlass (14) von den axialen Enden des Raums (16) jeweils beabstandet in einem mittleren Abschnitt des Raums (16) angeordnet ist.

9. Elektromotor nach einem der vorhergehenden Ansprüche, wobei der Kühlmitteleinlass (14) auf einer Oberseite des das anzutreibende Rad (1) lagernden Achsgehäuses (4) angeordnet ist.

10. Elektromotor nach einem der vorhergehenden Ansprüche, wobei sich der Raum (16) zumindest im Wesentlichen über die gesamte axiale Länge des Stator (6), insbesondere eines Satorblechpakets (6a) erstreckt.

## Claims

1. Electric motor, comprising an axle part of a wheel axle, and a drive apparatus for a wheel of a work machine, wherein the electric motor (5) comprises a rotor (7) which is rotatably received in a stator (6), which is supported at bearing plates (8, 9) arranged at the end side and in which two coil head spaces (10, 11) are provided which are bounded by the stator (6), by the rotor (7), by the shaft (25) and by the bearing plate (8) or by the bearing plate (9), wherein a cooling apparatus (12) for cooling the stator (6) and the rotor (7) comprises at least one coolant path (13) through the coil head spaces (10, 11) which is suppliable with coolant via a coolant inlet (14), wherein the cooling apparatus (12) comprises a space (16) which surrounds the stator (6) and which is bounded at the outer peripheral side by a housing part (17) spaced apart from the stator (6) and having the named coolant inlet (14) and communicates via communication openings (18) which are provided at the ends of the stator (6) with the coil head spaces (10, 11), with one bearing plate (8) being closed and free of a coolant passage and with the other bearing plate (9) or the stator (6) having at least one coolant outlet (19) at the end of the motor at the side of the bearing plate (9) such that coolant is conducted via the coolant inlet (14) into the space (16), is conducted in the space (16) propagating over the outer peripheral side (15) of the stator (6), is introduced through the communication openings (18) into the coil head spaces (10, 11), flows through bores (28) in the rotor (7) and/or through the air gap (27) between the stator (6) and the rotor (7) from the coil head space (10) at the side of the closed bearing plate (8) into the coil head space (11) having the at least one coolant outlet (19), and is drained through the at least one coolant outlet (19), **characterized in that** the electric motor (5) is configured without a housing with an exposed stator (6), wherein the housing part (17) bounding the named space (16) is formed by an axle part (4) of the wheel axle, in which the electric motor (5) is received, and wherein the electric motor (5), at the side of the closed bearing plate (8), is connected to a transmission (23).

2. Electric motor in accordance with one of the two preceding claims, wherein the outer peripheral surface of the stator (6) is arranged in an exposed manner in the space (16) and bounds the space (16) at the inner peripheral side.

3. Electric motor in accordance with the preceding claim, wherein cooling ribs (20) projecting into the space (16) are provided at the stator (6).

4. Electric motor in accordance with one of the preceding claims, wherein an stator end ring (21) is provided at the end side at the stator (6) and forms a unit with the stator metal sheet stack having the stator winding and has fastening points (22) for fastening the electric motor (5) to the installation environment.

5. Electric motor in accordance with one of the preceding claims, wherein the closed bearing plate (8) free of a coolant passage sealingly closes the motor (5) at the side of the coil head space (10).

6. Electric motor in accordance with one of the preceding claims, wherein the communication openings (18) between the space (16) and the coil head spaces (10, 11) are larger at the side of the closed bearing plate (8) than the communication openings (18) at the side of the coil head space (11) having the coolant outlet (19).

7. Electric motor in accordance with the preceding claim, wherein the communication openings (18) between the space (16) and the coil head spaces (10, 11) are dimensioned such that the ratio of the coolant quantity which enters into the coil head (10) at the side of the closed bearing plate (8) to the air quantity which enters into the coil head space (11) at the side of the coolant outlet (19) amounts to between 1.5: 1 and 3:1, preferably to approximately 2:1.

8. Electric motor in accordance with one of the preceding claims, wherein the coolant inlet (14) is arranged in a middle section of the space (16) respectively spaced apart from the axial ends of the space (16).

9. Electric motor in accordance with one of the preceding claims, wherein the coolant inlet (14) is arranged at an upper side of an axle housing (4) supporting the wheel (1) to be driven.

10. Electric motor in accordance with one of the preceding claims, wherein the space (16) extends at least substantially over the total axial length of the stator (6), in particular of a stator metal sheet stack (6a).

## Revendications

1. Moteur électrique avec une partie d'essieu d'un essieu de roue et avec un dispositif d'entraînement pour une roue d'un engin de travail, dans lequel le moteur électrique (5) comprend un rotor (7) logé de manière à pouvoir tourner dans un stator (6), qui est monté au niveau de flasques (8, 9) disposés côté frontal, et dans lequel sont prévus deux espaces de tête d'enroulement (10, 11), qui sont délimités par le stator (6), le rotor (7), l'arbre (25) et le flasque (8) ou le flasque (9), dans lequel un dispositif de refroidissement (12) servant à refroidir le stator (6) et le rotor (7) comprend au moins une voie pour agent de refroidissement (13) à travers les espaces de tête d'enroulement (10, 11), qui peut être alimentée en agent de refroidissement par l'intermédiaire d'une entrée d'agent de refroidissement (14), dans lequel le dispositif de refroidissement (12) comprend un espace (16) entourant le stator (6), qui est délimité côté périphérique extérieur par une partie de carter (17) tenue à distance du stator (6), présentant ladite entrée d'agent de refroidissement (14) et communique avec les espaces de tête d'enroulement (10, 11) par l'intermédiaire d'ouvertures de raccordement (18), qui sont prévues au niveau des extrémités du stator (6), dans lequel un flasque (8) est réalisé de manière fermée sans canal d'agent de refroidissement et l'autre flasque (9) ou le stator (6) présentent au niveau de l'extrémité du moteur sur le côté du flasque (9) au moins une sortie d'agent de refroidissement (19) de sorte que l'agent de refroidissement est acheminé dans l'espace (16) par l'intermédiaire de l'entrée d'agent de refroidissement (14), est acheminé de manière à se propager dans l'espace (16) par l'intermédiaire du côté périphérique extérieur (15) du stator (6), est introduit en passant par les ouvertures de raccordement (18) dans les espaces de tête d'enroulement (10, 11), s'écoule par des alésages (28) dans le rotor (7) et/ou par l'entrefer (27) entre le stator (6) et le rotor (7) depuis l'espace de tête d'enroulement (10) sur le côté du flasque (8) fermé dans l'espace de tête d'enroulement (11) avec l'au moins une sortie d'agent de refroidissement (19) et est évacué par l'au moins une sortie d'agent de refroidissement (19), **caractérisé en ce que** le moteur électrique (5) est réalisé sans carter avec un stator (6) dégagé, dans lequel la partie de carter (17) délimitant ledit espace (16) est formée par une partie d'essieu (4) de l'essieu de roue, dans laquelle le moteur électrique (5) est logé et dans lequel le moteur électrique (5) est relié à une transmission (23) sur le côté du flasque (8) fermé.

2. Moteur électrique selon l'une quelconque des revendications précédentes, dans lequel le stator (6) est disposé dans l'espace (16) de manière dégagée par sa face périphérique extérieure et délimité côté périphérique intérieur l'espace (16).

3. Moteur électrique selon la revendication précédente, dans lequel des nervures de refroidissement (20) dépassant dans l'espace (16) sont prévues au niveau du stator (6).

4. Moteur électrique selon l'une quelconque des revendications précédentes, dans lequel une bague d'extrémité de stator (21) est prévue côté frontal au niveau du stator (6), qui forme avec le paquet de tôles de stator présentant l'enroulement de stator une unité et présente des emplacements de fixation (22) servant à fixer le moteur électrique (5) au niveau de l'environnement de montage.

5. Moteur électrique selon l'une quelconque des revendications précédentes, dans lequel le flasque (8) fermé sans canal d'agent de refroidissement ferme de manière étanche le moteur (5) sur le coté de l'espace de tête d'enroulement (10).

6. Moteur électrique selon l'une quelconque des revendications précédentes, dans lequel les ouvertures de raccordement (18) entre l'espace (16) et les espaces de tête d'enroulement (10, 11) sur le côté du flasque (8) fermé sont plus grandes que les ouvertures de raccordement (18) sur le côté de l'espace de tête d'enroulement (11), qui présente la sortie d'agent de refroidissement (19).

7. Moteur électrique selon la revendication précédente, dans lequel les ouvertures de raccordement (18) entre l'espace (16) et les espaces de tête d'enroulement (10, 11) sont dimensionnées de telle manière que le rapport entre la quantité d'agent de refroidissement, qui entre dans la tête d'enroulement (10) sur le côté du flasque (8) fermé, et la quantité d'agent de refroidissement, qui entre dans l'espace de tête d'enroulement (11) sur le côté de la sortie d'agent de refroidissement (19), est compris entre 1,5:1 et 3:1, de préférence est d'environ 2:1.

8. Moteur électrique selon l'une quelconque des revendications précédentes, dans lequel l'entrée d'agent de refroidissement (14) est disposée dans une section centrale de l'espace (16) à distance respectivement des extrémités axiales de l'espace (16).

9. Moteur électrique selon l'une quelconque des revendications précédentes, dans lequel l'entrée d'agent de refroidissement (14) est disposée sur un côté supérieur du carter d'essieu (4) supportant la roue (1) à entraîner.

10. Moteur électrique selon l'une quelconque des revendications précédentes, dans lequel l'espace (16) s'étend au moins sensiblement sur la totalité de la longueur axiale du stator (6), en particulier d'un paquet de tôles de stator (6a).
